# EUROPÄISCHE PATENTANMELDUNG

(11) **EP 2 385 744 A1**
(43) Veröffentlichungstag der Anmeldung: **09.11.2011**
(21) Anmeldenummer: 11165315.0
(22) Anmeldetag: 09.05.2011
(51) Int. Cl.: H05B 3/50, F24H 3/04, B60H 1/22

(54) **Heizmodul zur Erwärmung strömender Medien und Verfahren zu seiner Herstellung**

(30) Priorität: 09.05.2010 DE 102010020070
(71) Anmelder: ESW GmbH, 22880 Wedel (DE)
(72) Erfinder: Janiak, Lennard, 22587, Hamburg (DE); Kobisch, Ulf, 22761, Hamburg (DE)
(74) Vertreter: Freitag, Joachim

(57) **Zusammenfassung**

Die Erfindung betrifft ein Heizmodul zur Erwärmung strömender Medien und Verfahren zu seiner Herstellung sowie Heizanordnungen unter Verwendung von H eizmodulen in unterschiedlichen räumlichen Anordnungen.

Die Aufgabe, eine neue Möglichkeit zur Erwärmung strömender Medien zu finden, die einfach in der Herstellung sowie robust und variabel anpassbar ist an verschiedenste Einsatzfälle mit unterschiedlichem Heizleistungsbedarf, wird unter Verwendung mehrerer scheibenförmiger PTC-Elemente, die innerhalb einer Ebene in mindestens einer Reihe zwischen Elektroden unterschiedlicher Polarität angeordnet sind, erfindungsgemäß gelöst, indem die Isolationsschicht zwischen den Elektroden (3) als eine relativ großflächige temperaturbeständige Klebeschicht (5) zur elektrischen Isolation der Elektroden (3) außerhalb von Kontaktflächen (313) der PTC-Elemente (2) sowie zur mechanischen Fixierung der Elektroden (3) miteinan der ausgebildet ist, wobei die Elektroden (3) entsprechend der Scheibengröße der PTC-Elemente (2) definierte Kontaktflächen (313) von höchsten 8/10 der Gesamtfläche der Elektroden (3) aufweisen, sodass die übrige Fläche zur sicheren mechanischen Verbindung der Elektroden (3) und Gewährleistung der dauerhaften Kontaktierung der PTC-Elemente (2) im Bereich der Kontaktflächen (313) vorgesehen ist.

## Beschreibung

Die Erfindung betrifft ein Heizmodul zur Erwärmung strömender Medien und ein Verfahren zu seiner Herstellung sowie Heizanordnungen unter Verwendung von Heizmodulen in unterschiedlichen räumlichen Anordnungen. Insbesondere findet die Erfindung Anwendung in Strömungskanälen zur Lufterwärmung für eine einfache Bestückung beliebiger Kanalquerschnitte sowie zur Nachrüstung von vorhandenen Strömungskanälen mit einheitlichen Heizmodulen.

PTC-Elemente (Positive-Temperature Coefficient), die auch als Kaltleiter oder Heizkeramik bezeichnet werden, haben die vorteilhaften Eigenschaften, dass sie sich weder überhitzen, da sie sich durch eine selbstregulierende Temperaturfunktion auszeichnen, noch irgendeine umweltschädliche Immission aufweisen. Aufgrund der selbstregelnden Eigenschaft haben sie sich für elektrische Heizvorrichtungen als Raumluftheizer und als Heizer für flüssige Medien durchgesetzt und haben besonders häufig in der Kraftfahrzeugtechnik Verwendung gefunden.
Zwei unterschiedliche Grundaufbauten von PTC-Heizern sind vorrangig anzutreffen.

Ein erster Aufbau besteht aus einer Struktur des keramischen Widerstandsmaterials in Form eines Wabenkörpers, der von dem zu erwärmenden Medium durchströmt wird und damit in innigen Kontakt mit der durch Stromfluss erhitzten Keramikstruktur kommt. Die Beaufschlagung des Wabenkörpers mit dem Heizstrom kann dabei sowohl durch Elektroden an den Wabenendbreichen (wie z.B. in DE 100 60 301 A1 beschrieben) erfolgen, wodurch jedoch nur kurze Strömungskanäle realisierbar sind, oder aber durch in Strömungsrichtung des zu erwärmenden Mediums eingebrachte Elektroden (z.B. US 4,939,349 A1), so dass der Heizstrom quer zur Strömungsrichtung erfolgt und bei kurzen Stromwegen eine größere Variabilität der Betriebsspannungen zulässt. Außerdem kann in letzterem Fall zum Wärmeaustausch zur Verfügung stehende Kanallänge wesentlich größer gewählt werden.

Ein zweiter Grundaufbau für Heizvorrichtungen mit PTC-Keramiken besteht darin, dass in Kunststoffrahmen gehaltene PTC-Elemente zwischen Elektrodenblechen und so genannten Radiatorelementen angeordnet sind, wobei die Radiatorelemente vorbeiströmende Luft erwärmen. Eine Vielfachanordnung von solchen Elementen ergibt dann eine flächige Lamellenstruktur, in der die PTC-Elemente in größeren rechteckigen Rahmen integriert sind, wie sie z.B. in EP 1 318 694 B1 oder EP 1 768 458 B1 für Zusatzheizer für Kraftfahrzeuge beschrieben sind.
Der grundlegende Aufbau solcher PTC-Heizanordnungen ist bereits in der US 5,192,853 A beschrieben worden. Die dort offenbarte Heizanordnung weist mehrere rechteckige PTC-Elemente auf, die zwischen zwei Elektroden angeordnet sind und auch zugleich als Wärmestrahler ausgebildet sein können. In diesem Fall sind die Elektroden direkt mit metallischen Radiatorstrukturen verbund en, die z.B. aus gefalzten Blechstreifen oder Rippenstrukturen bestehen. Dabei wird der Kontakt zwischen den Elektroden und der Kontaktfläche des PTC-Elements über Kontaktbleche und einen nichtleitenden Kleber am Rand der PTC-Elemente hergestellt, um thermische Ermüdung, Kurzschlüsse, Funken- und Spaltentladungen zu vermeiden.
Nachteilig an den letztgenannten Heizvorrichtungen in Form der radiatorbestückten Sandwich-Aufbauten sind neben den Problemen der zuverlässigen Kontaktierung bei Anordnungen mit einer Vielzahl von PTC-Elementen vor allem aber Verschmutzungen und Verstopfungen der feingliedrigen Radiatorelemente, die eine erhebliche Minderung der Heizleistung aufgrund des selbstregulierenden Überhitzungsschutzes der PTC - Elemente nach sich ziehen.

Der Erfindung liegt die Aufgabe zugrunde, eine neue Möglichkeit zur Erwärmung strömender Medien zu finden, die einfach in der Herstellung, robust und zuverlässig in ihrer Funktion sowie an verschiedenste Einsatzfälle mit unterschiedlichem Heizleistungsbedarf variabel anpassbar ist.

Erfindungsgemäß wird die Aufgabe bei einem Heizmodul zur Erwärmung strömender Medien unter Verwendung mehrerer scheibenförmiger PTC-Elemente, die innerhalb einer Ebene in mindestens einer Reihe zwischen beidseitig anliegenden metallischen Elektroden, die mit unterschiedlichen Polen einer Stromquelle in Verbindung stehen, angeordnet sind, wobei im Randbereich der PTC-Elemente eine Isolationsschicht vorhanden ist, dadurch gelöst, dass die Isolationsschicht zwischen den beiden Elektroden als relativ großflächige temperaturbeständige Klebeschicht zur elektrischen Isolation der Elektroden außerhalb von Kontaktflächen der PTC-Elemente sowie zur mechanischen Fixierung der Elektroden miteinander ausgebildet ist, wobei die Elektroden entsprechend der Scheibengröße der PTC-Elemente definierte Kontaktflächen von höchsten 8/10 der Gesamtfläche der Elektroden aufweisen, sodass die übrige Fläche zur sicheren mechanischen Verbindung der Elektroden und Gewährleistung der dauerhaften Kontaktierung der PTC-Elemente im Bereich der Kontaktflächen vorgesehen ist.

Vorteilhaft sind die Ebenen mit in Reihen angeordneten PTC-Elementen und der zwischen den Elektroden befindlichen Klebeschicht(en) im Wesentlichen orthogonal zur Strömungsrichtung des zu heizenden Mediums ausgerichtet, wobei zu vorderst und zu hinterst liegende Außenelektroden als prismenförmige Formteile zur Ausbildung eines stromlinienförmigen Gesamtkörpers ausgebildet sind.
Dabei haben die Außenelektroden zweckmäßig konvex gewölbte Außenflächen, wobei die Querschnittsfläche der Außenelektroden vorzugsweise halbkreisförmig oder derart geformt ist, dass die Querschnittsfläche des Gesamtkörpers des Heizmoduls die Form eines nicht gewölbten NACA-Profils ergibt.

In einer Ebene mit mehreren Reihen von PTC-Elementen sind diese für runde Strömungskanäle vorteilhaft in unterschiedlicher Richtung angeordnet, wobei sich die Mittelachsen der Reihen in einem Punkt schneiden, so dass das Heizmodul eine Sternform bildet.
Sind Ebenen der PTC-Elemente und der zwischen den Elektroden befindlichen Klebeschicht(en) im Wesentlichen orthogonal zur Strömungsrichtung des zu heizenden Mediums ausgerichtet, so erweist es sich als zweckmäßig, dass mindestens zu vorderst und zu hinterst liegende Außenelektroden als zylinderförmige Formteile mit radial angebrachten Finnen zum verbesserten Wärmeaustausch ausgebildet sind.
Dabei sind die PTC-Elemente zwischen den Stirnflächen der zylinderförmigen Formteile zweckmäßig rotationssymmetrisch zur Zylinderachse angeordnet.

Vorteilhaft können die Ebenen der PTC-Elemente und der zwischen den Elektroden befindlichen Klebeschicht(en) im Wesentlichen parallel zur Strömungsrichtung des zu heizenden Mediums ausgerichtet, wobei lateral links und rechts außen liegende Außenelektroden als plankonvexe zylinderlinsenförmige Formteile mit einer Querschnittsfläche in Form eines Kreis- oder Ellipsensegments ausgebildet sind.

Dabei sind die lateral links und rechts außen liegenden Außenelektroden zweckmäßig zu einem flachen drei- bis n-flächigen Prisma entartet.

In einer weiteren Ausführungsvariante sind die PTC-Elemente in mehreren parallelen Ebenen als Schichtaufbau von Elektroden und Ebenen von PTC-Elementen angeordnet, wobei zwischen den einzelnen PTC-Ebenen jeweils eine gemeinsame Zwischenelektrode vorhanden ist und die Elektroden im Schichtaufbau aufeinanderfolgend jeweils mit unterschiedlichen Polen einer Stromquelle verbunden sind.
Dazu sind die Außenelektroden des Schichtaufbaus als massive Formteile und Zwischenelektroden jeweils abwechselnd als blattförmige Stromschienen und als massive Zwischenelektroden ausgebildet.

Bei der Realisierung einer Heizanordnung unter Verwendung mehrerer Heizmodule der vorgenannten Art erweist es sich als vorteilhaft, wenn eine Anzahl von Heizmodulen orthogonal zur Strömungsrichtung des zu heizenden Mediums entlang mindestens einer Linie aufgereiht ist.
Dabei können die Heizmodule in einer oder mehreren Orthogonalebenen zur Strömungsrichtung des zu heizenden Mediums entweder entlang einer Geraden oder entlang mehrerer paralleler Geraden angeordnet sein.
Sind die Heizmodule in mehreren Orthogonalebenen zur Strömungsrichtung des zu heizenden Mediums entlang mindestens einer Geraden parallel zueinander angeordnet, so erweist es sich als zweckmäßig, dass die Heizmodule unterschiedlicher Orthogonalebenen zueinander versetzt angeordnet sind.

In einer anderen bevorzugten Ausführung einer Heizanordnung sind die Heizmodule in einer Orthogonalebene zur Strömungsrichtung des zu heizenden Mediums entlang mindestens einer Kreislinie angeordnet.
Sind die Heizmodule in mehreren Orthogonalebenen zur Strömungsrichtung des zu heizenden Mediums entlang mindestens einer Kreislinie angeordnet, so ist es vorteilhaft, die Heizmodule unterschiedlicher Orthogonalebenen zueinander verdreht anzuordnen.

Vorteilhaft können die Elektroden eines Heizmoduls in Form von rechteckigen Hohlelektroden ausgebildet sein, durch die das zu heizende Medium hindurchströmt.
Dabei sind die Hohlelektroden zweckmäßig in einer Ebene als Stapel mit wechselnder Polarität aneinandergereiht, wobei gegenüberliegende Außenflächen mit der isolierenden Klebeschicht und den dazwischen liegenden PTC-Elementen verbunden sind.

Bei der Realisierung einer Heizanordnung unter Verwendung von Heizmodulen mit Hohlelektroden erweist es sich als vorteilhaft, wenn die Hohlelektroden zweidimensional in Form einer Matrix mit in zwei Dimensionen wechselnder Polarität gestapelt sind, wobei die Außenflächen mit der isolierenden Klebeschicht und den dazwischen liegenden PTC-Elementen verbunden sind.
Dabei sind die Hohlelektroden vorzugsweise beidseitig offen und werden vom zu heizenden Medium parallel und gleichsinnig durchströmt.
In einer alternativen Variante sind die Hohlelektroden endseitig geschlossen und weisen benachbarte Hohlelektroden abwechselnd im Endbereich Durchbrüche derart auf, dass das zu heizenden Medium die Hohlelektroden mäanderförmig gegensinnig durchströmt.

Eine weitere Ausführungsvariante des erfindungsgemäßen Heizmoduls besteht darin, dass eine der Elektroden in Form einer rohrförmigen Hohlelektrode mit wenigstens zwei abgeplatteten Bereichen zur Anbringung der Reihe von PTC-Elementen ausgebildet ist und dass mindestens zwei Kontaktelektroden zum Kontaktieren der PTC-Elemente mit gegensätzlicher Polarität zur Hohlelektrode an den abgeplatteten Bereichen mittels der Klebeschicht angebracht sind.

Des Weiteren wird die Aufgabe erfindungsgemäß mit einem Verfahren zur Herstellung eines Heizmoduls für die Erwärmung strömender Medien unter Verwendung mehrerer scheibenförmiger PTC-Elemente mit den folgenden Schritten gelöst:
- Herstellen von Elektroden, zwischen denen mindestens eine Reihe von scheibenförmigen PTC-Elementen kontaktierbar ist, wobei die Elektroden außerhalb von für die PTC-Elemente vorgesehenen Kontaktflächen mit großflächigen, mindestens 1/5 der Gesamtfläche der Elektrode betragenden Klebeflächen für eine Klebeschicht (5) zur adhäsiven Elektrodenfixierung ausgestatten werden,
- Aufbringen einer elektrisch isolierenden, aushärtbaren und temperaturbeständigen Klebeschicht auf die Klebeflächen der Elektroden mit Aussparungen im Bereich der Kontaktflächen für die PTC-Elemente und
- Herstellen eines Schichtaufbaus aus mindestens zwei Elektroden, zwischen denen die PTC-Elemente in Aussparungen der Klebeschicht eingelegt und von beiden Elektrodenseiten her bis zum Aushärten der Klebeschicht unter Druck gehalten werden, so dass der Kontaktierungsdruck zwischen Elektroden und PTC-Elementen durch die ausgehärtete Klebeschicht erhalten wird.

Vorteilhaft wird ein Schichtaufbau mit mehreren Ebenen von PTC-Elementen hergestellt aus massiven Außenelektroden, die als Wärmetauscher vom zu heizenden Medium umströmt werden, und mindestens einer zwischen zwei PTC-Ebenen angeordneten Zwischenelektrode, die als gemeinsame Elektrode für beide angrenzenden PTC-Ebenen verwendet und mit der nächsten Elektrode durch eine Klebeschicht verbunden wird, so dass die Elektroden zwischen mehreren PTC-Ebenen alternierend mit unterschiedlicher Polarität einer Stromquelle beaufschlagt werden.

In einer anderen bevorzugten Herstellungsvariante wird ein Schichtaufbau mit mehreren Ebenen von PTC-Elementen hergestellt aus mindestens einer Hohlelektrode, die im Inneren vom zu heizenden Medium durchströmt wird und die zwischen mindestens zwei flachen, an mindestens eindimensional gegenüberliegend anliegenden PTC-Ebenen angefügten blattförmigen Stromschienen mit Klebeschichten verbunden wird, so dass die Elektroden zwischen mehreren PTC-Ebenen alternierend mit unterschiedlichen Polen einer Stromquelle beaufschlagt werden.

In einer weiteren vorteilhaften Herstellungsvariante wird ein Schichtaufbau mit mehreren Ebenen von PTC-Elementen hergestellt aus Hohlelektroden, die im Inneren vom zu heizenden Medium durchströmt werden, und die als Elektroden für mindestens eindimensional gegenüberliegend angrenzende PTC-Ebenen verwendet und mit der nächsten Elektrode durch eine Klebeschicht verbunden werden, so dass die Elektroden zwischen mehreren PTC-Ebenen alternierend mit unterschiedlichen Polen einer Stromquelle beaufschlagt werden.
Dabei wird der Schichtaufbau zwischen den Ebenen von PTC-Elementen zweckmäßig abwechselnd mit Hohlelektroden und blattförmigen Stromschienen gebildet, die alternierend mit unterschiedlichen Polen der Stromquelle kontaktiert werden.

In einer zweiten Variante kann der Schichtaufbau zwischen den Ebenen von PTC-Elementen aber auch ausschließlich aus Hohlelektroden gebildet werden, die alternierend mit unterschiedlichen Polen der Stromquelle kontaktiert werden.

Der vornehmliche Einsatzfall der oben beschriebenen erfindungsgemäßen Heizmodule ist das Erhitzen strömender Luft mittels Wärmetauschern, die von PTC-Heizelementen geheizt werden. Dabei stehen die PTC-Elemente (sog. PTC-Scheiben oder PTC-Pillen) in direktem Kontakt mit den Wärmetauschern und werden zwischen diesen mit einer hinreichenden Kraft angepresst und dadurch elektrisch kontaktiert. Dabei kann die elektrische Stromzufuhr sowohl über die Wärmetauscherkomponenten selbst als auch über zusätzliche Zwischenelektroden (Kontaktbleche oder Kontaktschienen) erfolgen. Vorteile der erfindungsgemäßen Bauform der Heizmodule sind:
- mechanisch robuste und kompakte Bauweise
- geringe Anfälligkeit für Sand- und Staubablagerungen
- Dichtigkeit gegen gasförmige und flüssige Medien.
- leichte Nachrüstbarkeit (direkt in beliebig geformten Kanälen)
- beliebige flächenmäßige Erweiterbarkeit (zweidimensionale Struktur),
- einfache Kaskadierbarkeit (dritte Dimension zur zweidimensionalen Struktur)

Zur Erhöhung des Wärmeeintrags in einen bestehenden Strömungskanal können die Heizmodule an den massiven Elektroden zusätzlich mit Rippen oder Finnen versehen, schräg gestellt oder als gleichartige Heizmodule in unterschiedlichster Weise kaskadiert werden. Die Form des Querschnittes der Strömungskanäle, in denen die Heizmodule angeordnet werden, kann beliebig, z.B. rechteckig oder kreisförmig, geformt sein, weil die Heizmodule für jeden Querschnitt flächenfüllend und kaskadiert anpassbar kombiniert werden können.
Insbesondere lassen sich die Heizmodule als Kleinhe izer in der Fahrzeugtechnik (auch Luftfahrttechnik) in Form von Vorsatz- oder Einsatzelementen in Strömungskanälen für die individuelle Regulierung der Lufttemperatur pro Sitzplatz einsetzen, indem diese im Endbereich von vorhandenen Luftkanälen nachgerüst et werden.

Die Erfindung basiert auf der Grundüberlegung, dass elektrische Heizvorrichtungen auf Basis von PTC-Keramik in der Regel stets an die konkrete Anwendung (bezüglich Strömungsquerschnitt, -geschwindigkeit und Temperatur) des strömenden Mediums angepasst werden müssen, um die Erwärmung nach Bedarf einfach regeln zu können. Vielfach verwendete PTC-Kanalsysteme in Wabenstruktur sind dabei zu aufwändig in der Herstellung und nicht einfach an unterschiedlichen Heizbedarf anpassbar. Bei der Erfindung wird deshalb ein modulares Konzept für multivalente Gestaltung von Heizanordnungen und deren einfache Anpassbarkeit an unterschiedlichste Dimensionierungen der Heizleistung und Strömungsdurchmesser sowie deren Nachrüstung für beliebige Anwendungen angestrebt. Das geschieht durch eine Grundform von Heizmodulen mit einem Schichtaufbau aus wärmeübertragenden Formteilen, die zugleich Elektrodenfunktion haben, und PTC-Heizelementen in "Pillenform", die je nach gewünschter Heizleistung in unterschiedlichen Paketla gen mittels einer temperaturbeständigen, isolierenden Klebeschicht zusammengefügt werden.

Mit der Erfindung ist es möglich, eine Heizanordnung zur Erwärmung strömender Medien zu realisieren, die einfach in der Herstellung, robust und zuverlässig in der Funktion sowie variabel anpassbar ist an verschiedenste Einsatzfälle mit unterschiedlichem Heizleistungsbedarf und an unterschiedliche Querschnittsformen und -flächen der Strömungskanäle.

Die Erfindung soll nachstehend anhand von Ausführungsbeispielen nähe r erläutert werden. Die Zeichnungen zeigen:
- Fig. 1:: den Prinzipaufbau eines erfindungsgemäßen Heizmoduls,
- Fig. 2:: eine Gestaltung der Erfindung mit erhöhter Leistung durch zwei Reihen von Heizelementen mit zwischengeordneter Stromschiene,
- Fig. 3:: eine Ausführungsform eines Heizmoduls mit vier Reihen von PTC-Elementen, die in Strömungsrichtung des zu heizenden Mediums zwischen zwei keilförmigen wärmeübertragenden Formteilen als massive Außenelektroden, die durch Zwischenelektroden hintereinander angeordnet sind,
- Fig. 4:: eine spezielle Ausführung eines querorientierten Heizmoduls in Sternform für Strömungskanäle mit dreieckigem oder rundem Querschnitt,
- Fig. 5:: eine weitere prinzipielle Gestaltung der Erfindung mit gegenüber Fig. 1 geänderter Ausrichtung der Heizebenen und der wärmeübertragenden Formteile längs der Strömungsrichtung des zu heizenden Mediums,
- Fig. 6:: eine modifizierte Ausführungsform des längs orientierten Heizmoduls nach Fig. 5 mit zwölf Reihen von PTC-Elementen, die parallel zur Strömungsrichtung des heizbaren Mediums in sechs PTC-Ebenen zwischen zwei als plankonvexe Zylindersegmente geformten massiven Außenelektroden angeordnet sind, die durch abwechselnd als massive achsparallele Zylinderschichten und blattförmig ausgebildete Zwischenelektroden separiert sind,
- Fig. 7:: eine Heizvorrichtung mit einer eindimensionalen Parallelanordnung von Heizmodulen gemäß Fig. 5 oder 6 für einen rechteckigen Strömungsquerschnitt,
- Fig. 8:: eine Heizvorrichtung als zweidimensionale Erweiterung der Parallelanordnu ng von Heizmodulen nach Fig. 7 für einen rechteckigen Strömungsquerschnitt,
- Fig. 9:: eine Heizvorrichtung als dreidimensional erweiterte Parallelanordnung von Heizmodulen nach Fig. 7 für einen rechteckigen Strömungsquerschnitt, wobei die Heizmodule der zweidimensionalen Formation gemäß Fig. 8 in mindestens zwei zur Strömungsrichtung orthogonalen Ebenen lateral versetzt angeordnet sind,
- Fig. 10:: eine Heizvorrichtung mit einer zweidimensionalen Anordnung von Heizmodulen für einen kreisförmigen Strömungsquersc hnitt, wobei die Heizmodule orthogonal entlang einer Kreislinie aufgereiht sind,
- Fig. 11:: eine Heizvorrichtung mit einer zweidimensionalen Anordnung von Heizmodulen für einen kreisförmigen Strömungsquerschnitt, bei der die Heizmodule orthogonal entlang zweier konzentrischer Kreislinien aufgereiht sind,
- Fig. 12:: eine Heizvorrichtung mit einer dreidimensionalen Anordnung von Heizmodulen für einen kreisförmigen Strömungsquerschnitt, wobei die Heizmodule gemäß der Formation nach Fig. 11 in mindestens zwei zur Strömungsrichtung orthogonalen Ebenen zueinander verdreht angeordnet sind,
- Fig. 13:: eine weitere Ausführungsform erfindungsgemäßer Heizmodule, bei der die PTC-Elemente zwischen wabenförmig zusammengefügten Strömungskanälen
- Fig. 14:: angeordnet sind, die als Hohlelekt roden ausgeführt sind und von dem zu heizenden Medium durchflossen werden, eine weitere Gestaltung eines Heizmoduls, bei der die PTC-Elemente an der Außenseite eines Strömungskanals aufgebracht und durch Stromschienen oder weitere parallele Kanal abschnitte kontaktiert sind,
- Fig. 15:: eine spezielle Ausführung einer Heizvorrichtung in vierzackiger Sternform mit zusätzlichen Rippen zur Oberflächenvergrößerung der massiven Außenelektroden für runde oder rechteckige Strömungskanäle,
- Fig. 16:: eine spezielle Ausführung eines längsHeizmoduls für runde Strömungskanäle, bei der die Sternform durch radial an zylinderförmigen massiven Elektroden angeformte Finnen erreicht wird,
- Fig. 17:: eine spezielle Ausführung einer Heizvorrichtung für runde Strömungskanäle, bei der die Sternform durch radial an zylinderförmigen massiven Elektroden angeformte Finnen erreicht wird,
- Fig. 18:: eine gegenüber Fig. 17 modifizierte Heizvorrichtung mit erhöhter Heizleistung für runde oder andere Strömungsquerschnitte, bei der die St ernform durch radial ausgerichtete Finnen an massiven Elektroden mit gerundeter prismatischer Grundform erreicht wird.

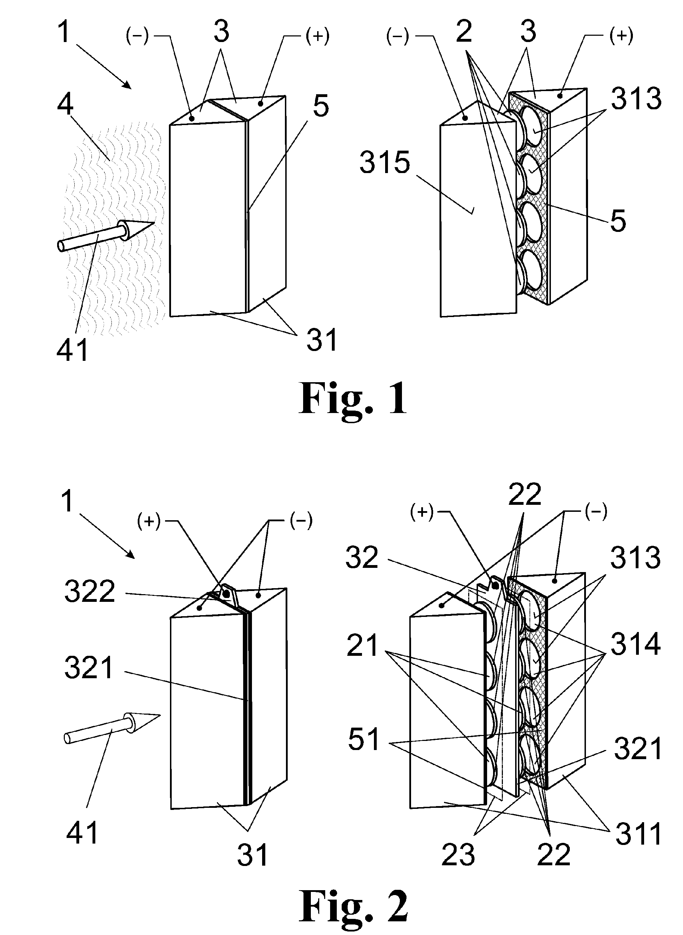

Das Heizmodul 1 besteht in einer Grundvariante - wie in Fig. 1 dargestellt - aus mehreren PTC-Elementen 2, die zwischen Elektroden 3 ang eordnet sind, wobei die Elektroden 3 als massive Außenelektroden 31 strömungsangepasst gestaltet sind und zugleich als Wärmeübertrager an ein zu heizendes strömendes Medium 4 fungieren. Ein solches grundlegendes Heizmodul 1 ist in Fig. 1 als geschlossene Bauform sowie in einer Explosionsdarstellung gezeigt.
Die PTC-Elemente 2 sind zwischen zwei Elektroden 3 so platziert, dass sie an deren planparallelen Außenflächen mit einer Spannung beaufschlagt werden können. Bei anliegender Spannung erhitzt der durchfließende Strom die PTC-Elemente 2 und diese geben über die großvolumig ausgebildeten wärmeübertragenden Elektroden 3 Wärme an ein zu heizendes Medium 4 ab.

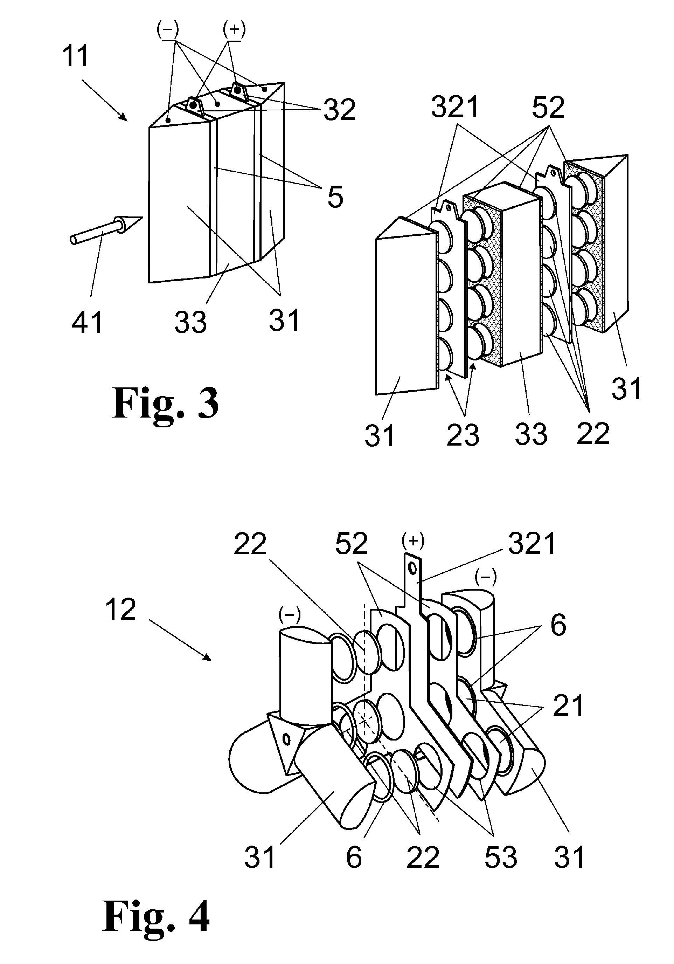

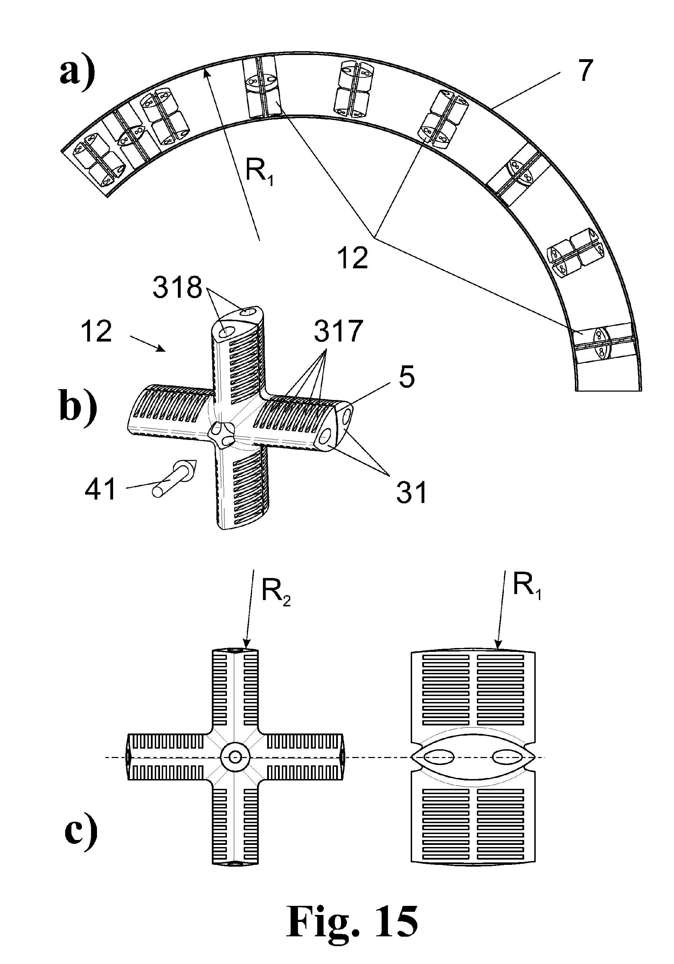

In der Ausführung von Fig. 1 erfolgt die elektrische Kontaktierung über wärmeübertragende massive Außenelektroden 31, indem diese als Elektroden 3 mit unterschiedlichen Polen (+/-) einer Spannungsquelle (nicht gezeichnet) in Verbindung stehen und durch eine Klebeschicht 5 gegeneinander isoliert sind. Die massiven Außenelektroden 31 sind in diesem Beispiel als keilförmige Formteile 311 in Gestalt eines dreiseitigen Prismas geformt, können aber auch gekrümmte Außenflächen 315 (wie z.B. in Fig. 4 gezeigt) aufweisen, wobei die jeweilige Kontaktfläche 313 des Formteils 311 zu den PTC-Elementen 2 im Wesentlichen plan ist.
Als PTC-Elemente 2 werden vorzugsweise runde PTC-Scheiben 21 (nur in Fig. 2 und 3 so beziffert) verwendet, die einen deutlich kleineren Durchmesser gegenüber den Abmessungen der Elektroden 3 aufweisen und die separat in einer oder mehreren Reihen 22 verteilt angeordnet sind. Die Elektroden 3 weisen entsprechend der Scheibengröße der PTC-Elemente 2 definierte Kontaktflächen 313 von höchsten 8/10 der Gesamtfläche der Elektroden 3 auf, sodass die restliche Fläche zur sicheren mechanischen Verbindung der Elektroden 3 und dauerhaften Kontaktierung der PTC-Elemente 2 im Bereich der Kontaktflächen 313 vorgesehen ist. Ein untere Grenze dieses Flächenverhältnisses ergibt sich nur aus den verfügbaren PCT -Scheiben 21 (Durchmesser und Temperaturverhalten) sowie aufgrund der abgeforderten Heizleistung des Heizmoduls 1 und der Optimierung der Wärmeübertragung an das zu heizende Medium 4 im vorgegebenen Strömungskanal 7 (nur in Fig. 15 gezeichnet).

Die Klebeschicht 5 verbindet die Elektroden 3 adhäsiv miteinander und ist zugleich eine elektrische Isolationsschicht. Da die Klebeschicht 5 die Isolation der unterschiedlich gepolten Elektroden 3 garantieren muss, ist diese entweder als doppelseitig klebende Folie ausgebildet (z.B. hitzeaktivierte Klebefolie 52, siehe Fig. 3 und 4) oder es sind innerhalb einer pastösen Klebeschicht 51 (siehe Fig. 2, 5 und 6) zusätzliche isolierende Abstandshalter (nicht gezeichnet, sog. Spacer, z.B. in Form kleiner Kugeln) vorgesehen, um nach dem unter Druck erfolgenden Aushärten de s Klebers die Klebeschicht 5 als gleichmäßig dicke Isolationsschicht zu erhalten.
Als Klebstoffe zur Realisierung der Klebeschicht 5 kommen - je nach erforderlicher Temperaturkurve des Heizmoduls 1 - Epoxidharz- (Polyepoxid-). PUR- (Polyurethan-), Silikon-Klebstoffe oder hitzeaktivierte Folien mit einer entsprechenden Temperaturbeständigkeit zur Anwendung.
Im Temperaturbereich bis 180°C können das beispielsweise Delo MONOPOX 1197 (ein 1-Komponenten-Epoxid) oder tesa^{®} HAF 8400 (hitzeaktivierte Folie) sein. Bis 120°C kann auch Araldit AW1 39 (2-Komponenten-Epoxid) zum Einsatz kommen.

Fig. 2 zeigt ein Heizmodul 1 in einer gegenüber Fig. 1 modifizierten Ausführung. Das Heizmodul 1 ist hier mit der doppelten Anzahl von PTC-Elementen 2 ausgestattet, indem in den Elektrodenflächen der keilförmigen massiven Formteile 311 Ausnehmungen 314 für die kreisförmigen PTC-Elemente 2 in jeweils einer Reihe 22 so eingearbeitet sind, dass die PTC-Scheiben 21 darin nicht vollständig versinken, und zwischen den in zwei PTC-Ebenen 23 eine gemeinsame Zwischenelektrode 32 für die elektrische Kontaktierung vorhanden ist, die in diesem Fall als blattförmige Stromschiene 321 ausgebildet ist.
Die Formteile 311 der Außenelektroden 31 sind dabei mit einem ersten Pol (z. B. +) und die Stromschiene 321 mit dem zweiten Pol (z.B. -) einer Stromquelle (nicht dargestellt) verbunden. Obwohl der Gleichstrombetrieb die bevorzugte Betriebsart ist, kann das Heizmodul auch mit Wechselstrom betrieben werden, wenn die PTC-Elemente dafür spezifiziert sind.

Das dauerhafte Verbinden der stromführenden Formteile 311 und der Stromschiene 321 wird - wie zu Fig. 1 beschrieben - mit Klebeschichten 5 realisiert. An den in Ausnehmungen 314 befindlichen Kontaktflächen 313 der stromführenden Formteile 311 und den Kontaktflächen 313 der Stromschiene 321 mit den PTC-Scheiben 21 besteht keine Klebverbindung. Dazu wird in diesem Beispiel eine pastöse, aushärtbare Klebeschicht 51 an den betreffenden Stellen ausgespart, d.h. beim Auftragen freigehalten (z.B. mittels "PTC-Dummies", die nachträglich entfernt werden). Als Zusatzmaßnahme können Dichtringe 6 (wie in Fig. 4 gezeichnet) vorgesehen werden, um die Kontaktflächen 313 der einzelnen PTC-Scheiben 21 gegen das Eindringen von pastösem Kleber zu sichern und beim Aushärten der Klebeschicht 51 zu versiegeln, so dass auch andere schädliche äußere Einflüsse von den Kontaktflächen 313 der Außenelektroden 31 und der Zwischenelektrode 32 fernzuhalten .
Da in Fig. 2 die elektrische Kontaktierung der Formteile 311 (erster Pol der Stromquelle, z. B. -) und der Stromschiene 321 (zweiter Pol, z. B. +) vorgesehen ist und das dauerhafte Verbinden der Formteile 311 vorteilhaft um die Stromschiene 321 herum (unter Einschluss der Stromschiene 321) geschieht, ist für den elektrischen Anschluss der Stromschiene 321 im verklebten Zustand eine Kontaktierungslasche 322 zum Verbinden mit dem zweiten Pol (+) der Stromquelle (nicht dargestellt) vorgesehen.
Die äußere Gestalt der Formteile 311 ist in Fig. 1 und 2 so ausgelegt, dass die PTC-Scheiben 21, die in einer oder mehreren PTC-Ebenen 23 jeweils in linearen Reihen 22 angeordnet sind, im Wesentlichen orthogonal zur Strömungsrichtung 41 des zu heizenden Mediums 4 ausgerichtet sind, wobei die Formteile 311 eine "stromlinienförmige Verkleidung" bilden, an der die Strömung vorbeigleitet und an der somit die in Strömungsrichtung 41 vergrößerten Oberflächen der Formteile 311 eine bessere Wärmeübertragung von den PTC-Scheiben 21 auf das zu heizende Medium 4 gewährleisten. Die Heizmodule 1 gemäß Fig. 1 und 2 werden deshalb als quer orientierte Heizmodule 11 bezeichnet, bei denen die PTC-Ebenen 23 orthogonal zur Strömungsrichtung 41 angeordnet sind.

In der Ausführungsform gemäß Fig. 3 ist ein weiteres quer orientiertes Heizmodul 11 dargestellt, das gegenüber der Gestaltung nach Fig. 2 nochmals modifiziert ist, um es mit einer größeren Heizleistung zu versehen.
Die Änderung besteht in der erhöhten Anzahl von PTC-Scheiben 21, indem mehrere Reihen 22 von PTC-Scheiben 21 in unterschiedlichen PTC-Ebenen 23 angeordnet sind, wobei zwischen zwei benachbarten PTC-Ebenen 23 eine Stromschiene 321 und zwischen zwei Paaren von so benachbart angeordneten PTC-Reihen 22 eine weitere Elektrode 3 in Form einer planparallelen massiven Zwischenelektrode 33 vorhanden ist zur Ergänzung der "stromlinienförmigen" Grundform des quer orientierten Heizmoduls 11 und zur Vergrößerung seiner wirksamen Oberfläche zum Wärmeaustausch mit dem zu heizenden Medium 4.
Die massive Zwischenelektrode 33, deren planparallele Oberflächen die Kontaktflächen 313 für die PTC-Scheiben 21 bereitstellen, ist in ihrer Dicke so dimensioniert, dass ihre Außenflächen 315 eine effektive Wärmeübertragung von der in Strömungsrichtung 41 zweiten und dritten PTC-Reihe 22 der insgesamt vier PTC-Ebenen 23 erreicht. Dazu kann die massive Zwischenelektrode 33 auch konvex geformte Außenflächen 315 oder Oberflächenvergrößerungen in Form von Rippen 317 (nur in Fig. 15 bis 18 gezeichnet) aufweisen.

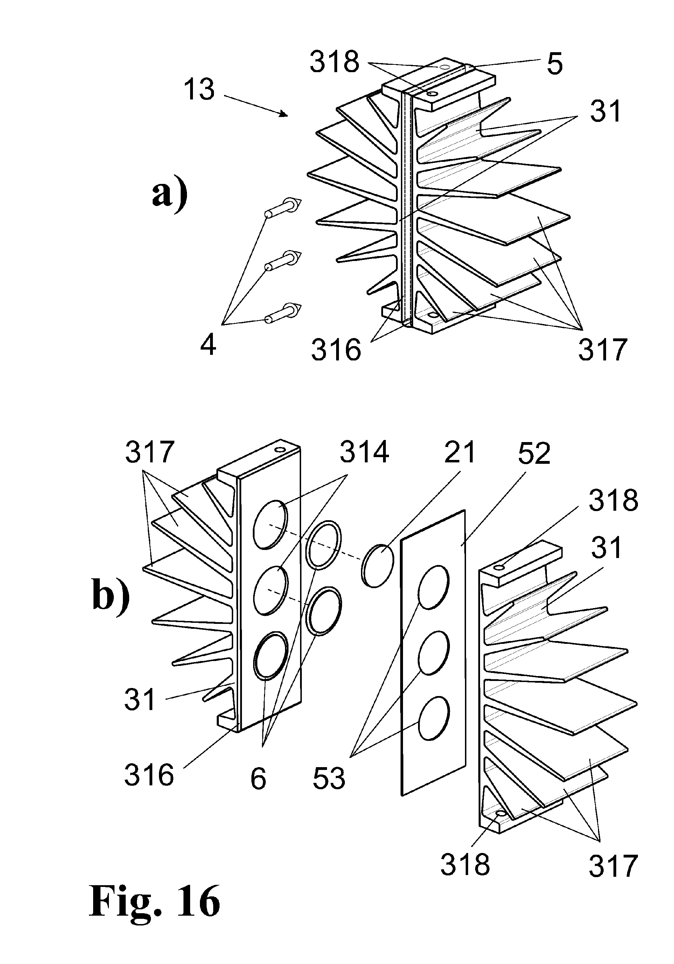

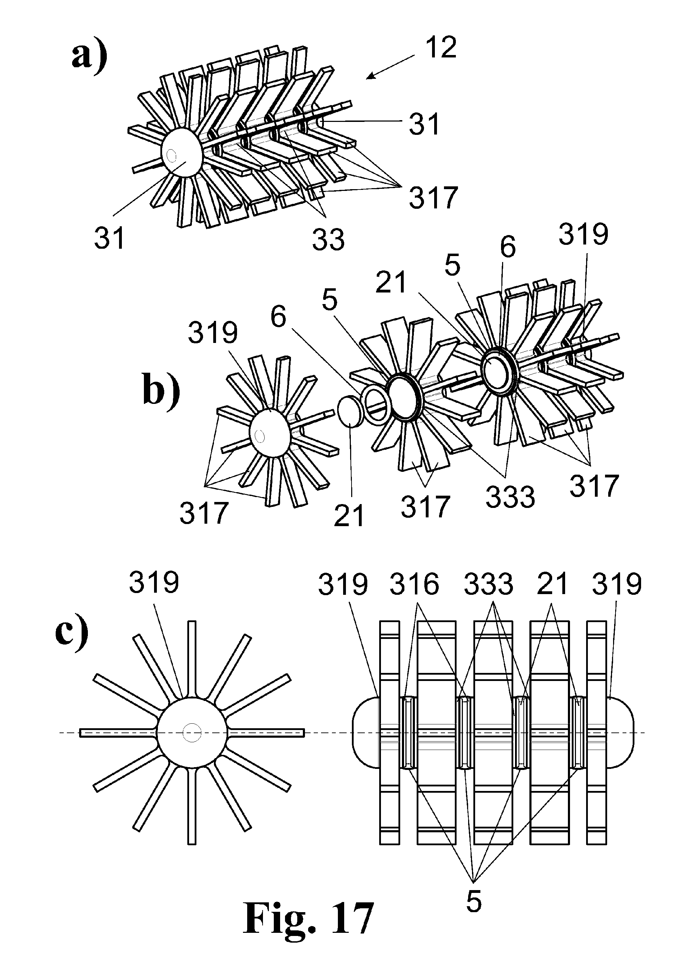

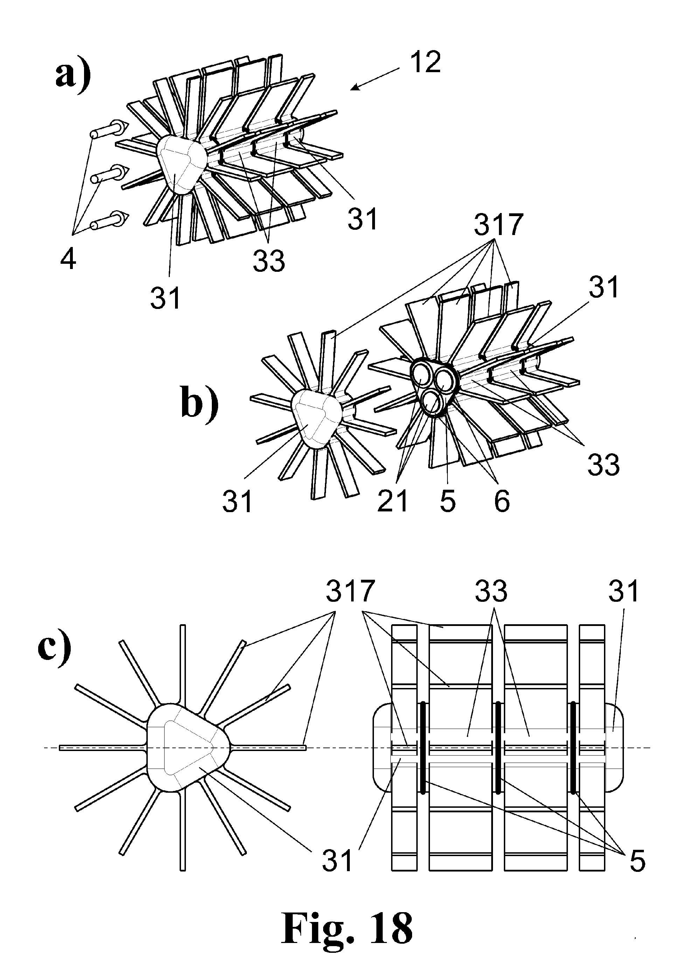

Im Gegensatz dazu reichen die als blattförmige Stromschienen 321 ausgeführten Zwischenelektroden 32 nicht bis an die Oberfläche der durch die massiven Elektroden 31 und 33 gebildeten Außenflächen 315, um diese in die Klebeschicht 5 bis auf die Kontaktierungslasche 322 nach außen vollständig einzubetten. Dadurch werden elektrische Kurzschlüsse zwischen gegensätzlichen Elektroden 3 (z.B. durch Feuchtigkeit und Verschmutzung in einem gasförmigen Medium 4 oder bei leitfähigem flüssigem Medium 4) durch die als Isolationsschicht wirkende Klebeschicht 5
Für den Fall, dass keine blattförmigen Stromschienen 321 vorgesehen sind, weil zwischen massiven Außenelektroden 31 oder Zwischenelektroden 33 nur eine PTC-Ebene vorgesehen ist, kann der elektrische Abstand zwischen den gegensätzlich gepolten Elektroden 3 dadurch vergrößert werden, dass eine Fase 316 (nur in Fig. 16 und 17 gezeichnet) an den Außenkanten der Elektroden 3 vorhanden ist. Die pastöse Klebeschicht 51 oder die hitzeaktivierte Folie 52 wird dann während des unter Druck erfolgenden Verklebens der Elektroden 3 in den so verbreiterten Randbereich des Klebespaltes ausquellen und eine verbreiterte Randwulst der Klebeschicht 5 ausbilden (wie z.B. Fig. 16a dargestellt). Dieselbe Vorgehensweise ist ebenfalls in Fig. 17 und 18 vorgesehen und ist - obwohl nicht so detailliert gezeichnet - auch auf die Ausführung von Fig. 1 anzuwenden.

Der in Fig. 3 gezeigte Aufbau eines quer orientierten Heizmoduls 11 kann durch weitere planparallele massive Zwischenelektroden 33 zwischen jeweils zwei Paaren von durch Stromschienen 321 getrennten PTC-Ebenen 23 beliebig erweitert werden, so dass innerhalb eines quer orientierten Heizmoduls 11 eine beliebige Anzahl von PTC-Ebenen 23 (durchaus auch > 10) mit jeweils einer oder mehreren PTC-Reihen 22 in Strömungsrichtung 41 des zu heizenden Mediums 4 hintereinander angeordnet sein können. Die quer orientierte Ausrichtung der PTC-Ebenen 23 ist dabei lediglich gegenüber der "Stromlinienform" des quer orientieren Heizmoduls 11 als orthogonal aufzufassen. Es versteht sich von selbst, dass die Heizmodule 11 in eine m Strömungskanal auch gegenüber der Strömungsrichtung 41 geneigt angeordnet werden können, um ein leicht seitliches Anströmen des zu heizenden Medium 4 zu ermöglichen. Insofern ist die in allen Figuren angegebenen Strömungsrichtung 41 nur als Leitrichtung aufzufassen, von der in alle Raumrichtungen bis zu 45° abgewichen werden kann.

Bezüglich der "Stromlinienform" soll noch erwähnt sein, dass die in Fig. 1 bis 3 gezeigten keilförmigen Formteile 311 als Außenelektroden 31 und die in Fig. 3 gezeigten quaderförmigen massiven Zwischenelektroden 33 jeweils konvex gewölbte Außenflächen 315 aufweisen können, so dass die Gesamtform des Heizmoduls 11 einem so genannten nicht gewölbten NACA-Profil (wie es aus der Luftfahrt bekannt ist) angeglichen sein kann.

In Fig. 4 ist eine Ausführung eines sternförmigen Heizmoduls 12 für den Einbau in vorzugsweise zylindrische Strömungskanäle in einer Explosionsdarstellung zu sehen. Dieser Aufbau entspricht dem Grundprinzip der Ausführung von Fig. 2, wobei jedoch die PTC-Scheiben 21 in zwei durch eine sternförmige Stromschiene 321 getrennte PTC-Ebenen 23 entsprechend der ebenfalls sternförmigen Struktur der Formteile 311 verteilt sind. Hier sind die zu Fig. 1 und 2 bereits erwähnten Dichtringe 6 gezeigt, die die PTC-Scheiben 21 einzeln an deren Peripherie abdichten. Die Klebeschicht 5 ist in diesem Beispiel wieder als beidseitig hitzeaktivierbare Klebefolie 52 mit Ausstanzungen 53 für die PTC-Scheiben 21 ausgeführt. Das sternförmige Heizmodul 12 besteht in diesem Beispiel aus zweimal drei Reihen 22 von PTC-Scheiben 21, deren Mittelachsen sich in einem Schnittpunkt treffen. Die Schnittpunkte der Reihen 22 beider PTC-Ebenen 23 liegen auf der Symmetrieachse des so gebildeten sternförmigen Heizmoduls 12.

Eine Erweiterung des sternförmigen Heizmoduls 12 durch weitere PTC-Ebenen 23 und sternförmige planparallele massive Zwischenelektroden 33 ist in Analogie zu Fig. 3 ebenfalls möglich, aber aus Übersichtlichkeitsgründen nicht gezeichnet.

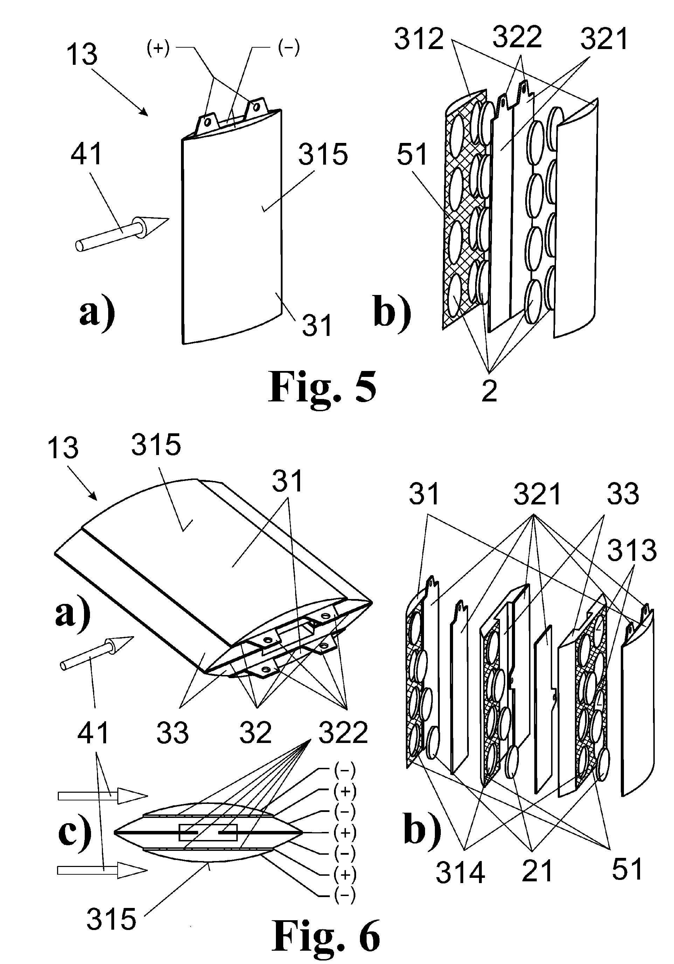

Die in Fig. 5 gezeigte Konfiguration unterscheidet sich von den Ausführungen von Fig. 1 bis Fig. 4 dadurch, dass die Orientierung der PTC-Scheiben 21 innerhalb des Heizmoduls 1 in Bezug auf die Strömungsrichtung 41 des strömenden zu heizenden Mediums 4 in eine Parallelstellung geändert ist, sodass es nachfolgend als längs orientiertes Heizmodul 13 bezeichnet wird.
Die als Wärmetauscher fungierenden Außenelektroden 31 sind in diesem Beispiel als flache plankonvexe Zylinderschnitte ausgeführt, die nachfolgend als zylinderlinsen - förmiges Formteile 312 bezeichnet werden und sich symmetrisch zu einem strömungsoptimierten Profil oder einem bereits oben erwähnten NACA-Profil ergänzen.
Zwischen den zylinderlinsenförmigen Formteilen 312 sind gemäß Fig. 5 zwei PTC-Ebenen 23 mit je zwei PTC-Reihen 22 durch eine Stromschiene 321 getrennt, wobei die Formteile 312 mit demselben Pol der Stromquelle (z. B. -) und die Stromschiene 321 mit dem anderen Pol (z. B. +) verbunden sind.

Das längs orientierte Heizmodul 13 nach Fig. 5, dessen PTC-Ebenen 23 parallel zur Strömungsrichtung 41 ausgerichtet sind, lässt sich analog zur Gestaltung gemäß Fig. 3 ebenfalls durch weitere Lagen von PTC-Ebenen 23 und abwechselnd angeordneten blattförmigen Stromschienen 321 und massiven Zwischenelektroden 33 beliebig erweitern.
Einen solchen Aufbau zeigt Fig. 6, bei dem zwischen den zylinderlinsenförmigen Außenelektroden 31 die Schichtenfolge aus PTC-Ebenen 23, Klebeschichten 51 und Zwischenelektroden 32 bzw. 33 analog zu Fig. 3 in gleicher Weise vorhanden ist. Lediglich die Ausrichtung der PTC-Ebenen 23, der Zwischenelektroden 32 und 33 sowie der Außenelektroden 31 (zylinderlinsenförmige Formteile 312) ist in eine Parallelstellung zur Strömungsrichtung 41 geändert worden. Die massiven Zwischenelektroden 33 sind in diesem Fall als achsparallel ge schnittene Zylindersegmente 332 geformt, die gegebenenfalls noch eine Nut zur Kontaktierung von blattförmigen Stromschienen 321 im Innern des längs orientieren Heizmoduls 13 aufweisen können, wie es aus Fig. 6c ersichtlich ist.
Die Parallelstellung der PTC-Ebenen 23 bei den längs orientierten Heizmodulen 13 gemäß Fig. 5 und 6 ist wiederum ausschließlich als gegenüber der "Stromlinienform" des Heizmoduls 13 aufzufassen. Es gilt wie bereits oben für quer orientierte Heizmodule 11 erläutert, dass die Heizmodule 13 in einem Strömungskanal auch bis zu 45° geneigt angeordnet werden können, um ein leicht seitliches Anströmen des zu heizenden Mediums 4 zu ermöglichen.

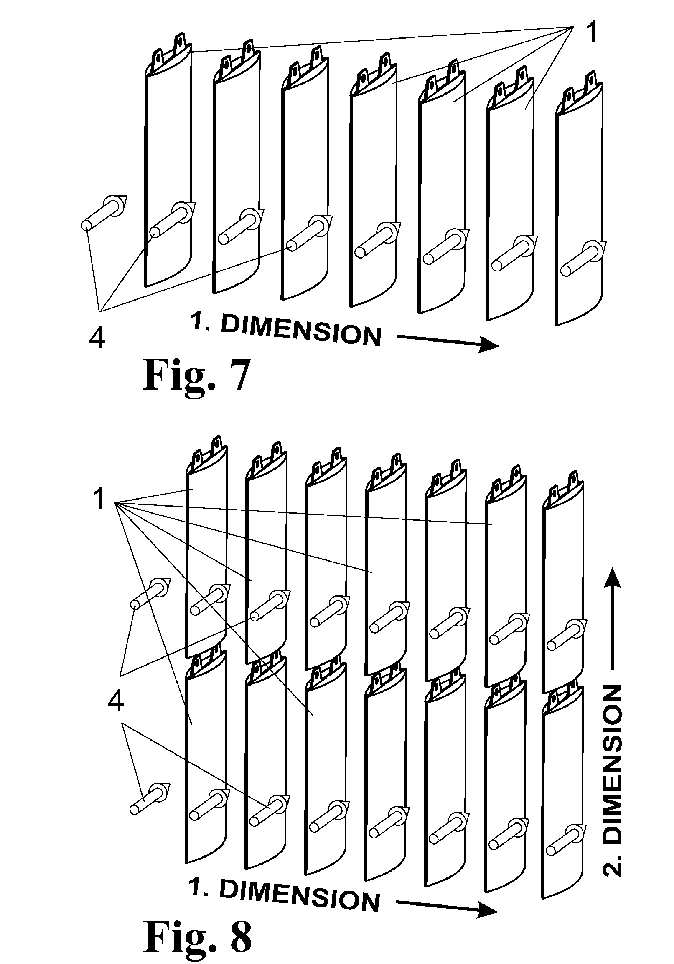

In Fig. 7 bis Fig. 12 werden die Möglichkeiten der Kombination (Vielfachanordnung von Heizmodulen 1 und deren Kaskadierung) in bis zu drei Dimensionen aufgezeigt. Sämtliche Heizmodulvarianten der Fig. 1 bis Fig. 6 lassen sich im Sinne einer modularen Erweiterung an jeden beliebigen Strömungsquerschnitt des zu heizenden Mediums 4 und jede auf das Medium 4 zu übertragende Heizleistung anpassen. Die dargestellten Variationen der Raumanordnungen sind weitestgehend selbsterklärend. Fig. 7 zeigt ein einreihiges lineares Gitter von Heizmodulen 1 in Parallelausrichtung, das für rechteckige Strömungskanäle geeignet ist. Eine annähernd quadratische Kanalform kann mit der doppelreihig erweiterten Anordnung gemäß Fig. 8 in der zweiten Dimension ausgefüllt werden.

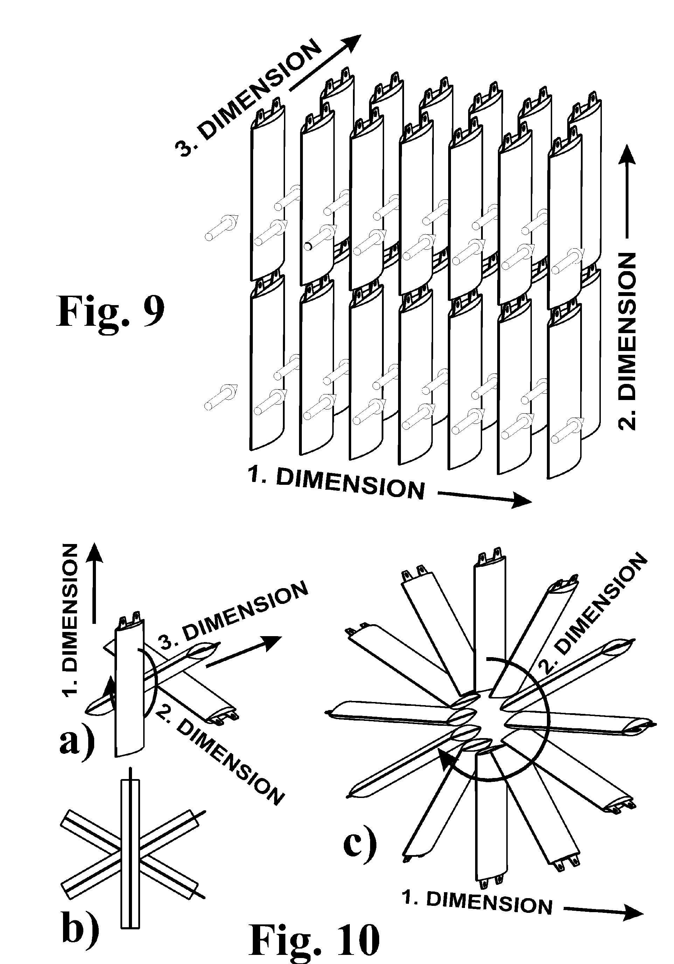

Fig. 9 zeigt die Erweiterung auf die dritte Dimension, die zwei hintereinander liegende doppelreihige Gitter von Heizmodulen 1 gemäß Fig. 8 aufweist, wobei das zweite Gitter gegenüber dem ersten Gitter versetzt (auf Lücke) angeordnet ist. Diese Kaskadierung von zweidimensionalen Gittern kann in der Raumtiefe (3. Dimension) noch beliebig fortgesetzt werden.
Eine ebenfalls dreidimensionale Anordnung von Heizmodulen 1 ist in Fig. 10 gezeigt. In Fig. 10a sind die Heizmodule 1 für einen rohrförmigen das zu heizende Medium 4 führenden Strömungskanal 7 (nur in Fig. 15 gezeichnet) um die Kanalachse gedreht angeordnet sind. Für die in Fig. 10a gewählten drei kaskadierten einzelnen Heizmodule 1 ergibt sich ein Drehwinkel von 60°. Fig. 10b zeigt die Modulanordnung von Fig. 10a nochmals zur Verdeutlichung in frontaler Draufsicht des Querschnitts des (nicht gezeichneten) Strömungskanals 7.

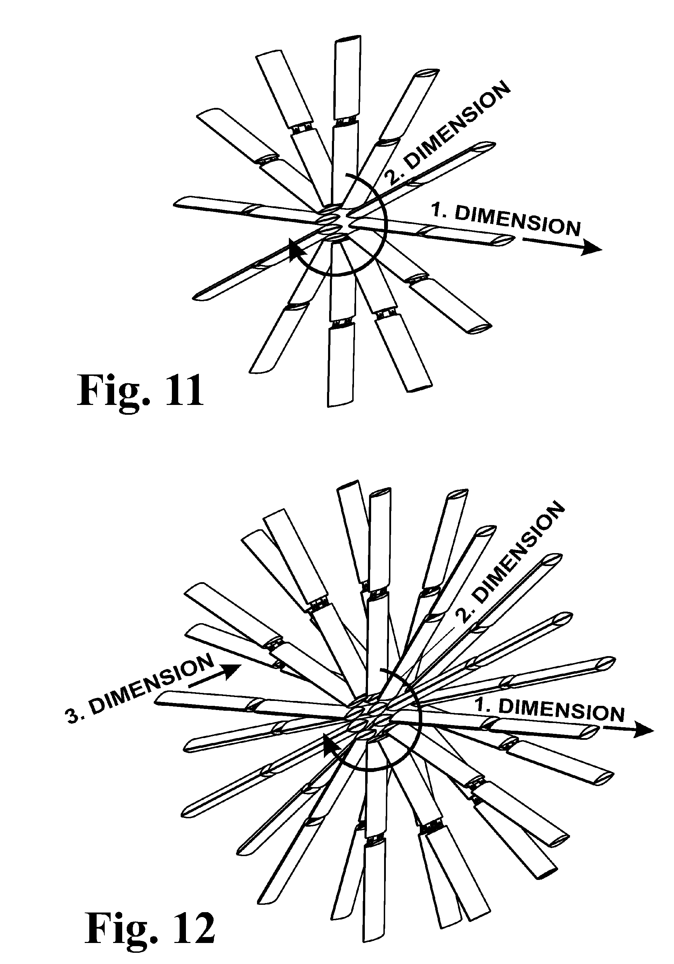

Fig. 10c verdeutlicht eine Lösung für größere röhrenförmige Strömungskanäle 7, wobei das dargestellte sternförmige Heizgitter durch Anordnung einer Vielzahl von Heizmodulen 1 entlang einer Kreislinie erzeugt wird, wobei die Heizmodule radial zum Kreismittelpunkt ausgerichtet sind. In der Raumtiefe ist dieses sternförmige Heizgitter in Analogie zu Fig. 10a versetzt hintereinander angeordnet ebenfalls zu einer Kaskadierung geeignet, wie es nachfolgend in Fig. 12 für ein größeres sternförmiges Heizgitter gezeichnet ist.
Fig. 11 zeigt noch zusätzliche Erweiterungen des sternförmigen Heizgitters nach Fig. 10c für einen noch größeren Rohrquerschnitt, wobei die Heizmodule 1 entlang zweier konzentrischer Kreislinien radial zum Kreismittelpunkt angeordnet sind. Fig. 12 verdeutlicht die zweistufige Kaskadierung von Fig. 11.

Die in den Figuren 7-12 dargestellte Art des längs orientierten Heizmoduls 13 ist lediglich als eine bevorzugte Ausführung gewählt worden und beschränkt in keiner Weise die Allgemeingültigkeit der Raumordnung der Heizanordnungen für alle anderen Formen der Heizmodule 11 und 12.
Diese Heizanordnungen sind für kleine bis sehr ausgedehnte Kanalquerschnitte konzipiert und können beliebig erweitert werden, ohne dass der Aufbau der Heizmodule 1 geändert werden muss. Die Kaskadierung der Heizmodule in der Raumtiefe (als 3. Dimension bezeichnet) ist für die Mehrfachheizung vor allem in Strömungskanälen mit hohem Mediendurchsatz konzipiert. Sie ist aber auch für die Erhöhung der "Maschendichte" der Heizanordnung im Strömungsquerschnitt geeignet.

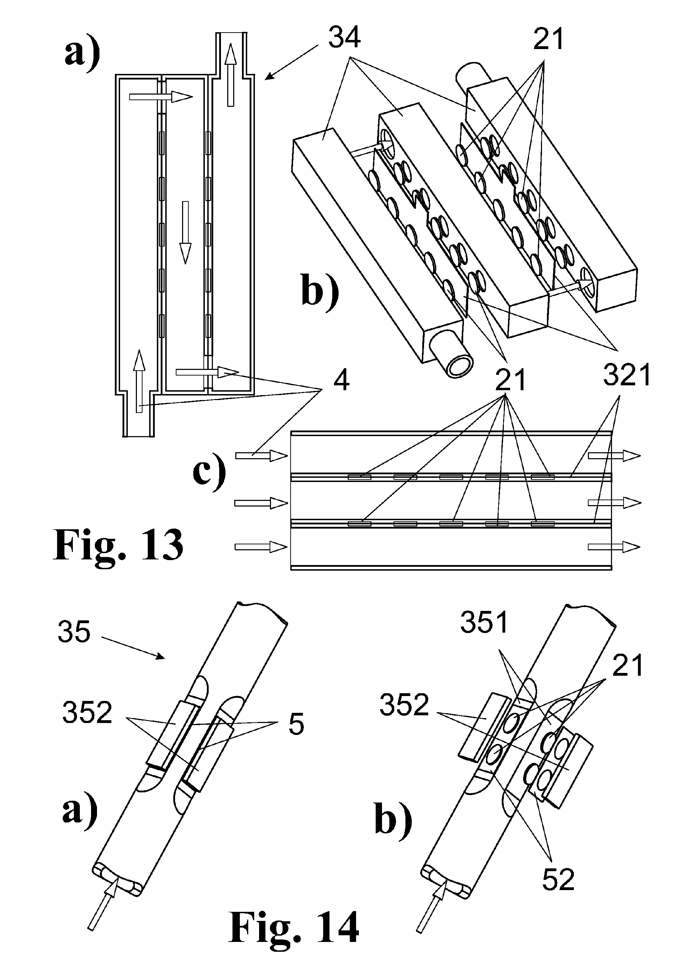

Die Ausführungsformen nach den Figuren 13 und 14 stellen ein anderes Realisierungsprinzip von Heizmodulen 1 in Form von waben - oder röhrenförmigen Heizmodulen 14 dar, bei dem das zu heizende Medium 4 die Elektroden 3 nicht außen umströmt, sondern im Innern durchströmt. Der prinzipielle Schichtaufbau aus massiven Elektroden 3 und blattförmigen Stromschienen 331, zwischen denen mindestens eine PTC-Ebene 23 aus einer oder mehreren Reihen 22 von PTC-Scheiben 21 angeordnet ist, wird in gleicher Weise angewendet.

Der prinzipielle Aufbau von Fig. 13 entspricht den zu den Figuren 1 bis 6 beschrieben Grundprinzipien der Kontaktierung von PTC-Elementen 2 mit dem Unterschied, dass die Elektroden 3 hier als Hohlelektroden 34 vom zu heizenden Medium 4 durchströmt werden. Eine Erweiterung der in Fig. 14 dargestellten Konfiguration wird erreicht, indem die Anzahl der durchströmten Hohlelektroden 34, mit zusätzlichen Stromschienen 331 und/oder weiteren aufgeschichteten Hohlelektroden 34 entsprechend gesteigert wird.
Die Durchströmung mit dem zu heizenden Medium 4 kann dabei - wie in Fig. 13a und b mit stellenweise untereinander verbundenen Hohlelektroden 34 gezeigt - mäanderförmig erfolgen. Es ist aber auch möglich , mit gleicher Strömungsrichtung 41 durch alle parallel angeordneten Hohlelektroden 34 in einer gleichartig zu Fig. 13b mit PTC-Scheiben 21 bestückten und mit blattförmigen Zwischenelektroden 321 kontaktierten Wabenstruktur gemäß Fig. 13c das zu heizende Medium 4 zu erwärmen.

Eine weitere modifizierte Bauform von Heizmodulen, wie sie in Fig. 14 gezeigt ist, entspricht dem zu Fig. 13 beschrieben Prinzip der Kontaktierung der PTC-Scheiben 21 mit dem Unterschied, dass nur eine der Elektroden 3, die die PTC-Scheiben 21 kontaktieren, Erwärmung des Mediums 4 dient und in diesem Beispiel als rohrförmige Hohlelektrode 35 ausgebildet ist und vom zu heizenden Medium 4 durchströmt wird, während weitere (ungenutzt beheizte) Elektroden 3 lediglich zur Kontaktierung der parallel zur Strömungsrichtung 41 angebrachten Reihe 22 der PTC-Scheiben 21 dienen. Dabei sind für die PTC-Scheiben 21 am Umfang der rohrförmigen Hohlelektrode 35 abgeflachte Bereiche 351 vorhanden, auf die außen liegende Kontaktelektroden 352 mittels dazwischen gelegter Klebefolie 52 angepresst und fixiert werden.

Die in Fig. 14 dargestellten Konfiguration, die vier gleichmäßig am Rohrumfang verteilte abgeflachte Bereichen 351 mit je zwei PTC-Scheiben 21 und einer Kontaktelektrode 352 aufweist, kann in ihrer Heizleistung variiert werden, indem die Anzahl und Verteilung der PTC-Scheiben 21 sowie die Anordnung der äußeren Kontaktelektroden 352 am Umfang und entlang der rohrförmigen Hohlelektrode 35, die als alleiniger Wärmeübertrager an das innen durchströme nde zu heizende Medium 4 dient, verändert wird.
Außerdem lassen sich weitere rohrförmige Hohlelektroden 35 an die vorhandenen Kontaktelektroden 352 mit jeweils einer dazwischen liegenden Reihe 22 von PTC-Elementen 2 anlagern, um in Analogie zu Fig. 13 eine Anordnung (nicht gezeichnet) zu erzeugen, die sich bei Bedarf auch in zwei Dimensionen quer zur Strömungsrichtung 41 des Mediums 4 erstrecken kann. In einer solchen Konfiguration sind dann wiederum in Analogie zu Fig. 13c eine simultan gleichgerichtete Durchströmung aller parallel liegenden rohrförmigen Hohlelektroden 35 oder eine mäanderförmig gegenläufige Durchströmung jeweils benachbarter Hohlelektroden 35 analog zu Fig. 13a möglich.

In Fig. 15b ist ein sternförmiges Heizmodul 12 mit einer quer zur Strömungsrichtung ausgerichteten PTC-Ebene 2 (hier nur als Klebeschicht 5 sichtbar und bezeichnet) in einer perspektivischen Darstellung zu sehen. Dieses sternförmige Heizmodul 13 ist gemäß Fig. 15a mehrfach kaskadiert in einem rohrförmigen Strömungskanal 7 (z.B. einem Lüftungsschlauch) angeordnet. Die Heizmodule 12 sind gegeneinander um die Achse des Strömungskanals 7 verdreht befestigt.

Gegenüber allen bisher beschriebenen Heizmodulen 1 weist das Heizmodul 12 als Besonderheiten eine Vielzahl von Rippen 317 an den konvex geformten massiven Außenelektroden 31 sowie vier Arme mit gewölbten Endflächen auf, die in orthogonalen Richtungen unterschiedlichen Krümmungsradien aufweist. Die erste Radius ist dabei der maximalen Krümmung R₁ des Strömungskanals 7 angepasst und der zweite Radius entspricht der Krümmung R₂ des Rohrquerschnitts. In den Endflächen der Arme des sternförmigen Heizelements 12 sind außerdem Befestigungslöcher 318 zur Fixierung des Heizmoduls 12 im Strömungskanal 7 eingearbeitet.
Die Rippen 317 sind parallel zur Strömungsrichtung 41 ausgerichtet und durch Nuten innerhalb der massiven Außenelektroden 31 erzeugt, um den Wärmeaustausch mit dem Medium 4 zu verbessern.

Fig. 16 zeigt ein längs orientiertes Heizelement 13, das ebenfalls an einen rohrförmigen Strömungskanal 7 (hier nicht gezeichnet) angepasst ist. In diesem Beispiel sind die massiven Außenelektroden 31 mit sternförmig und nahezu radial zur Kanalachse ausgestellten Rippen 317 ausgebildet, wie es Fig. 16a zu entnehmen ist. Die Rippen 317 werden wegen ihrer einzeln unterschiedlichen Ausrichtung nachfolgend auch als Finnen 317 bezeichnet, ohne dass sie in ihrer grundlegenden Funktion von der der Rippen 317 verschieden sind.
Aufgrund der in nur einer PTC-Reihe 22 angeordneten PTC-Scheiben 21 haben die Finnen 317 unterschiedliche Längen und Neigungswinkel gegenüber der PTC-Ebene 23 (hier nicht bezeichnet). Die PTC-Ebene 23 enthält - ohne Beschränkung der Allgemeinheit - in diesem Beispiel nur eine Reihe 22 aus drei PTC-Scheiben 21. Jede PTC-Scheibe 21 wird an der Peripherie von einem Dichtring 6 (z.B. O-Ring) umspannt, bevor die PTC-Scheiben 21 in die Ausnehmungen 314 eingelegt werden, wie es die Explosionsdarstellung von Fig. 16b zeigt. Danach wird die hitzeaktivierbare Klebefolie 52 mit ihren für die PTC-Scheiben 21 (nebst Dichtring 6) vorgefertigten Ausstanzungen 53 auf die PTC-bestückte Außenelektrode 31 aufgelegt und von der anderen Außenelektrode 31 unter Hitzeeinwirkung angepresst und verklebt.
Da in dieser Ausführung des Heizelements 13 nur die zwei Außenelektroden 31 über die Befestigungslöcher 318 mit unterschiedlichen Polen einer Stromquelle (nicht dargestellt) verbunden sind, ist an der Klebefläche der Außenelektroden 31 im Randbereich eine Fase 316 zur Vergrößerung des Elektrodenabstandes vorhanden.

Bei der Hitzeaktivierung der Klebefolie 52 wird durch die Druckbeaufschlagung der Außenelektroden 31 der durch beide Fasen 316 im Randbereich der Elektroden 31 vergrößerte Klebespalt mit ausquellendem Material der Klebefolie 52 gefüllt, so dass sich eine verbreiterte Randwulst bildet, die Funkenüberschläge oder Kriechströme zwischen den Außenelektroden 31 unterbindet.

Fig. 17 zeigt eine weitere Ausführungsform eines sternförmigen Heizmoduls 12 für rohrförmige Strömungskanäle 7 mit kleinem Durchmesser.
Auch in diesem Fall sind Finnen 317 zur Vergrößerung der für den Wärmeaustausch mit dem zu heizenden Medium 4 zur Verfügung stehenden Oberfläche der Elektroden 3 vorgesehen. In diesem Beispiel besteht das Heizmodul 12 aus zwei massiven Außenelektroden 31 und drei massiven Zwischenelektroden 33, wie der perspektivischen Darstellung von Fig. 17a zu entnehmen ist.
Die Explosionsdarstellung von Fig. 17b zeigt den genaueren Aufbau des Heizmoduls 12 mit Außenelektroden 31 in Form von zylindrischen Formte ilen 319 mit sternförmig ausgestellten Finnen 317 sowie drei massiven Zwischenelektroden 33, gleichfalls als zylindrische Formteile 333 mit Finnen 317 ausgebildet.
Zwischen den zylindrischen Formteilen 319 und 333 sind vier PTC-Ebenen mit jeweils einer PTC-Scheibe 21, umspannt von einem Dichtring 6 und einer in diesem Fall ringförmigen Klebeschicht 5, angeordnet. Die Klebeschicht 5 wird - wie in der Seitenansicht von Fig. 17c mit gestrichelten Linien dargestellt - im Randbereich zwischen den zylindrischen Formteilen 319 und 333 in die gegenüberliegenden umlaufenden Fasen 316 der zylindrischen Formteile 319 und 333 eingepresst, um durch die verbreiterte Klebeschicht 5 den Elektrodenabstand im Randbereich der Außen- und Zwischenelektroden 31 bzw. 33 zu vergrößern. Eine alternative oder auch ergänzende Maßnahme, die demselben Zweck (der Verhinderung von Funkenentladungen) dient, ist eine elektrisch isolierende Oberflächenbeschichtung der Elektroden 31 und 33 mindestens im beschriebenen Randbereich.

Die zylindrischen Formteile 319 und 333 sind um eine (nicht gezeichnete) Kanalachse mit gleichverteilt angeordneten, radial ausgerichteten Finnen 317 ausgestattet, wobei die Außenelektroden 31 am zylindrischen Formteil 319 einen halbkugelförmigen Abschluss aufweisen, durch den die Strömungseigenschaften des Heizmoduls 12 verbessert werden. Weil dadurch die Oberfläche der Außenelektroden 31 für den Wärmeaustausch mit dem zu heizenden Medium 4 vergrößert ist gegenüber der Oberfläche der Zwischenelektroden 33, können an den Außenelektroden 31 die Finnen 317 schmaler ausgeführt werden, wie es Fig. 17b und der Seitenansicht von Fig. 17c zu entnehmen ist.

Eine zu Fig. 17 sehr ähnliche Variante eines sternförmigen Heizmoduls 12 mit quer zur Strömung des Mediums 4 orientierten PTC-Ebenen 23 ist in Fig. 18 dargestellt.
Darin sind in drei PTC-Ebenen 23 jeweils drei PTC-Scheiben 21 im Dreieck angeordnet. Denkbar sind bei gleicher Grundform des Heizmoduls 12 auch PTC-Ebenen 23 mit vier oder sechs PTC-Scheiben 21, wobei im letzteren Fall sowohl eine dreieckige als auch kreisförmige Anordnung in Frage kommt.
Bei der gezeichneten Dreieranordnung der PTC-Scheiben 21 sind die zwei Außenelektroden 31 und die ebenfalls zwei Zwischenelektroden 33 gegenüber Fig. 17 zu einer abgerundeten Form von dreiseitigen Prismen modifiziert. Dabei sind die Finnen 317 aber trotzdem radial ausgerichtet und tangential gleichmäßig beabstandet.
Alle anderen Einzelheiten sind analog zur Beschreibung von Fig. 17 ausgeführt.

### Bezugszeichenliste

- 1: Heizmodul
- 11: quer orientiertes Heizmodul (mit quer zur Strömung ausgerichteten PTC-Heizern)
- 12: sternförmiges Heizmodul (mit quer zur Strömung ausgerichteten PTC-Heizern)
- 13: längs orientiertes Heizmodul (mit längs der Strömung ausgerichteten PTC-Heizern)
- 14: röhrenförmiges Heizmodul (mit längs der Strömung ausgerichteten PTC-Heizern)

- 2: PTC-Element
- 21: (kreisförmige) Scheibe
- 22: Reihe
- 23: PTC-Ebene

- 3: Elektroden
- 31: massive Außenelektroden
- 311: (keilförmiges) Formteil
- 312: (zylinderlinsenförmiges) Formteil
- 313: Kontaktfläche
- 314: Ausnehmung (für PTC-Element)
- 315: Außenfläche
- 316: Fase
- 317: Rippe, Finne
- 318: Befestigungslöcher
- 319: zylindrisches Formteil
- 32: Zwischenelektrode
- 321: (blattförmige) Stromschiene
- 322: Kontaktierungslasche
- 33: massive Zwischenelektrode
- 331: quaderförmiges Formteil
- 332: (achsparalleles) Zylindersegment
- 333: zylindrisches Formteil
- 34: Hohlelektrode (mit rechteckigem Querschnitt)
- 35: rohrförmige Hohlelektrode
- 351: abgeplatteter Bereich
- 352: Kontaktelektrode

- 4: zu heizendes Medium
- 41: Strömungsrichtung

- 5: Klebeschicht
- 51: pastöse Klebeschicht
- 52: Klebefolie
- 53: Ausstanzung (für PTC-Element)

- 6: Dichtring

- 7: Strömungskanal

- R₁: Krümmung des Strömungskanals
- R₂: Krümmung des Rohrquerschnitts

## Patentansprüche

1. Heizmodul zur Erwärmung strömender Medien unter Verwendung mehrerer scheibenförmiger PTC-Elemente, die innerhalb einer Ebene in mindestens einer Reihe zwischen beidseitig anliegenden metallischen Elektroden, die mit unterschiedlichen Polen einer Stromquelle in Verbindung stehen, angeordnet sind, wobei im Randbereich der PTC-Elemente eine Isolationsschicht vorhanden ist, **dadurch gekennzeichnet, dass**
- die Isolationsschicht zwischen den beiden Elektroden (3) als relativ großflächige temperaturbeständige Klebeschicht (5) zur elektrischen Isolation der Elektroden (3) außerhalb von Kontaktflächen (313) der PTC-Elemente (2) sowie zur mechanischen Fixierung der Elektroden (3) miteinander ausgebildet ist, wobei
- die Elektroden (3) entsprechend der Scheibengröße der PTC-Elemente (2) definierte Kontaktflächen (313) von höchsten 8/10 der Gesamtfläche der Elektroden (3) aufweisen, sodass die übrige Fläche zur sicheren mechanischen Verbindung der Elektroden (3) und Gewährleistung der dauerhaften Kontaktierung der PTC-Elemente (2) im Bereich der Kontaktflächen (31 3) vorgesehen ist.

2. Heizmodul nach Anspruch 1, **dadurch gekennzeichnet, dass**
die Ebenen (23) der PTC-Elemente (2) und der zwischen den Elektroden (3) befindlichen Klebeschicht (5) im Wesentlichen orthogonal zur Strömungsrichtung (41) des zu heizenden Mediums (4) ausgerichtet sind, wobei zu vorderst und zu hinterst liegende Außenelektroden (31) als prismenförmige Formteile (311) zur Ausbildung eines stromlinienförmigen Gesamtkörpers ausgebildet sind.

3. Heizmodul nach Anspruch 2, **dadurch gekennzeichnet, dass**
die Außenelektroden (31) konvex gewölbte Außenflächen (315) aufweisen.

4. Heizmodul nach Anspruch 1, **dadurch gekennzeichnet, dass**
die Ebenen der PTC-Elemente (2) und der zwischen den Elektroden(3) befindlichen Klebeschicht (5) im Wesentlichen orthogonal zur Strömungsrichtung (41) des zu heizenden Mediums (4) ausgerichtet sind, wobei mindestens zu vorderst und zu hinterst liegende Außenelektroden (31) als zylinderförmige Formteile (316) mit radial angebrachten Finnen (37) zum verbesserten Wärmeaustausch ausgebildet sind.

5. Heizmodul nach Anspruch 1, **dadurch gekennzeichnet, dass**
die Ebenen (23) der PTC-Elemente (2) und der zwischen den Elektroden (3) befindlichen Klebeschicht (5) im Wesentlichen parallel zur Strömungsrichtung (41) des zu heizenden Mediums (4) ausgerichtet sind, wobei lateral links und rechts außen liegende Außenelektroden (31) als plankonvexe zylinderlinsenförimge Formteile (312) mit einer Querschnittsfläche in Form eines Kreis- oder Ellipsensegments ausgebildet sind.

6. Heizmodul nach Anspruch 1, **dadurch gekennzeichnet, dass**
die PTC-Elemente (2) in mehreren parallelen Ebenen als Schichtaufbau von Elektroden (3) und Ebenen (23) von PTC-Elementen (2) angeordnet sind, wobei zwischen den einzelnen PTC-Ebenen (23) jeweils eine gemeinsame Zwischenelektrode (32; 33) vorhanden ist und die Elektroden (3) im Schichtaufbau aufeinanderfolgend jeweils unterschiedliche Polarität aufweisen.

7. Heizmodul nach Anspruch 6, **dadurch gekennzeichnet, dass**
Außenelektroden (31) des Schichtaufbaus als massive Formteile (311; 312) und Zwischenelektroden (32; 33) jeweils abwechselnd als blattförmige Stromschienen (321) und als massive Zwischenelektroden (33) ausgebildet sind.

8. Heizanordnung unter Verwendung mehrerer Heizmodule nach den Ansprüchen 1 bis 7, **dadurch gekennzeichnet, dass** eine Anzahl von Heizmodulen (1) in mindestens einer Orthogonalebene zur Strömungsrichtung (41) des zu heizenden Mediums (4) entlang mindestens einer Geraden aufgereiht sind.

9. Heizanordnung unter Verwendung mehrerer Heizmodule nach den Ansprüchen 1 bis 7, **dadurch gekennzeichnet, dass** eine Anzahl von Heizmodulen (1) in mindestens einer Orthogonalebene zur Strömungsrichtung (41) des zu heizenden Mediums (4) entlang mindestens einer Kreislinie angeordnet sind.

10. Heizmodul nach Anspruch 1, **dadurch gekennzeichnet, dass**
die Elektroden (3) in Form von rechteckigen Hohlelektroden (34) ausgebildet sind, durch die das zu heizende Medium (4) hindurchströmt.

11. Heizanordnung unter Verwendung von Heizmodulen nach Anspruch 10, **dadurch gekennzeichnet, dass**
die Hohlelektroden (34) entlang einer Ebene als Stapel mit wechselnder Polarität aneinandergereiht sind, wobei gegenüberliegende Außenflächen mit der isolierenden Klebeschicht (5) und dazwischen liegenden PTC-Elementen (2) verbunden sind.

12. Heizanordnung unter Verwendung von Heizmodulen nach Anspruch 10, **dadurch gekennzeichnet, dass**
die Hohlelektroden (34) zweidimensional in Form einer Matrix mit in zwei Dimensionen wechselnder Polarität gestapelt sind, wobei die Außenflächen mit der isolierenden Klebeschicht (5) und den dazwischen liegenden PTC-Elementen (2) verbunden sind.

13. Heizanordnung nach Anspruch 11 oder 12, **dadurch gekennzeichnet, dass**
die Hohlelektroden (34) beidseitig offen und vom zu heizenden Medium (4) parallel gleichsinnig durchströmt sind.

14. Heizanordnung nach Anspruch 11 oder 12, **dadurch gekennzeichnet, dass**
die Hohlelektroden (34) endseitig geschlossen sind und benachbarte Hohlelektroden (34) abwechselnd im Endbereich Durchbrüche derart aufweisen, dass das zu heizende Medium (4) die Hohlelektroden (34) mäanderförmig gegensinnig durchströmt.

15. Heizmodul nach Anspruch 1, **dadurch gekennzeichnet, dass**
dass eine der Elektroden (3) in Form einer rohrförmigen Hohlelektrode (35) mit wenigstens zwei abgeplatteten Bereichen (351) zur Anbringung der Reihe (22) von PTC-Elementen (2) ausgebildet ist und mindestens zwei Kontaktelektroden (352) zum Kontaktieren der PTC-Elemente (2) mit gegensätzlicher Polarität zur Hohlelektrode (35) an den abgeplatteten Bereichen (351 ) mittels der Klebeschicht (5) angebracht sind.

16. Verfahren zur Herstellung eines Heizmoduls für die Erwärmung strömender Medien unter Verwendung mehrerer scheibenförmiger PTC-Elemente (2) mit den Schritten:
- Herstellen von Elektroden (3), zwischen denen mindestens eine Reihe (22) von scheibenförmigen PTC-Elementen (2; 21) kontaktierbar ist, wobei die Elektroden (3) außerhalb von für die PTC-Elemente (2) vorgesehenen Kontaktflächen (313) mit großflächigen, mindestens 1/5 der Gesamtfläche der Elektrode (3) betragenden Klebeflächen für eine Klebeschicht (5) zur adhäsiven Elektrodenfixierung ausgestattet werden,
- Aufbringen einer elektrisch isolierenden, aushärtbaren und temperaturbeständigen Klebeschicht auf die Klebeflächen der Elektroden mit Aussparungen im Bereich der Kontaktflächen für die PTC-Elemente und
- Herstellen eines Schichtaufbaus aus mindestens zwei Elektroden (31; 32; 33), zwischen denen die PTC-Elemente (2) in Aussparungen (53) der Klebeschicht (5) eingelegt und von beiden Elektrodenseiten her bis zum Aushärten der Klebeschicht (5) unter Druck gehalten werden, so dass der Kontaktierungsdruck zwischen Elektroden und PTC-Elementen durch die ausgehärtete Klebeschicht erhalten wird.

17. Verfahren nach Anspruch 16, wobei ein Schichtaufbau mit mehreren Ebenen (23) von PTC-Elementen (2) hergestellt wird aus massiven Außenelektroden (31), die als Wärmetauscher vom zu heizenden Medium (4) umströmt werden, und mindestens einer zwischen zwei PTC-Ebenen (23) angeordneten Zwischenelektrode (32; 33), die als gemeinsame Elektrode (3) für beide angrenzenden PTC-Ebenen (23) verwendet und mit der jeweils nächsten Elektrode (31; 32; 33) durch eine Klebeschicht (5) verbunden wird, so dass die Elektroden (3) zwischen mehreren PTC-Ebenen (23) alternierend mit unterschiedlichen Polen einer Stromquelle verbunden werden können.

18. Verfahren nach Anspruch 16, wobei ein Schichtaufbau mit mehreren Ebenen (23) von PTC-Elementen (2) hergestellt wird aus mindestens einer Hohlelektrode (34; 35), die im Inneren vom zu heizenden Medium (4) durchströmt wird, und die als Elektrode (3) für mindestens eindimensional gegenüberliegend angrenzende PTC-Ebenen (23) verwendet und mit der nächsten Elektrode (3) durch eine Klebeschicht (5) verbunden werden, so dass die Elektroden (3) zwischen mehreren PTC-Ebenen (23) alternierend mit unterschiedlichen Polen einer Stromquelle verbunden werden können.
